# EUROPÄISCHE PATENTANMELDUNG

(11) **EP 2 034 254 A2**
(43) Veröffentlichungstag der Anmeldung: **11.03.2009**
(21) Anmeldenummer: 08163646.6
(22) Anmeldetag: 04.09.2008
(51) Int. Cl.: F24J 3/08

(54) **Vorrichtung zum Schutz eines Sondenfusses für eine Erdsonde**

(30) Priorität: 06.09.2007 AT 13922007
(71) Anmelder: Kopp, Erwin, 5622 Goldegg/Pongau (AT)
(72) Erfinder: Kopp, Erwin, 5622 Goldegg/Pongau (AT)
(74) Vertreter: Babeluk, Michael

(57) **Zusammenfassung**

Die Erfindung betrifft eine Vorrichtung zum Schutz eines Sondenfußes (1) für eine Erdsonde, welche zumindest ein um etwa 180° gekrümmtes Bogenteil (4) aufweist, mittels dessen Zu- und Rücklaufrohre (2, 3) zur Durchströmung eines Wärmeträgers verbindbar sind, wobei ein Schutzzylinder (5) - in Betriebslage betrachtet - unterhalb des Sondenfußes (1) fest mit diesem verbindbar ist. Um eine Beschädigung des Sondenfußes (1) bei der Montage zu vermeiden ist vorgesehen, dass der Schutzzylinder (5) eine vorzugsweise angeschweißte Aufnahme (7) für den Sondenfuß (1) aufweist, welche den Sondenfuß (1) zumindest in zwei gegenüberliegenden Bereichen umfasst.

## Beschreibung

Die Erfindung betrifft eine Vorrichtung zum Schutz eines Sondenfußes für eine Erdsonde, welche zumindest ein um etwa 180° gekrümmtes Bogenteil aufweist, mittels dessen Zu- und Rücklaufrohre zur Durchströmung eines Wärmeträgers verbindbar sind, wobei ein Schutzzylinder- in Betriebslage betrachtet - unterhalb des Sondenfußes fest mit diesem verbindbar ist.

Oberflächennahe Geothermie-Systeme mit einer oder mehreren vertikalen Erdbohrungen werden überwiegend mit Erdwärmesonden ausgerüstet, welche die Wärme im Untergrund nutzen. Die Erdwärmesonde ist ein vertikaler Erdwärmeüberträger und Bestandteil eines geschlossenen Solekreislaufes, über welchen eine Wärmepumpe betrieben wird. Sie entzieht dem Erdreich bzw. dem Grundwasser über den Solekreislauf eine konstante Wärme und leitet diese dann an das Heizsystem im Gebäude weiter. Aus einer Kilowattstunde elektrischer Energie können somit beispielsweise bis zu 5 Kilowattstunden Nutzenergie gewonnen werden. Die Leistung der Wärmepumpe muss dabei den Anforderungen des Gebäudes und der Nutzer angepasst werden. Erdwärmesonden werden je nach Wärmebedarf und geologischen Verhältnissen in Tiefen von 20 bis über 300 Meter eingebaut.

Die Sonden bestehen in der Regel aus einem Kunststoffsondenfuß mit Anschluss für zwei oder vier Kunststoff-Rohre.

Die Erdsonde wird in die Erdwärmebohrung eingebracht und anschließend mit einer Suspension, bestehend aus Tonmineralien, Hochofenzement, Quarzmehl und Wasser verpresst. Dieser Verpressung muss nach Aushärtung eine dauerhafte, dichte und statisch einwandfreie Einbindung der Erdwärmesonde in den umgebenden Bodenbereich gewährleisten. Gleichzeitig soll ein guter Wärmeübergang erzielt werden.

Das Bestreben jedes Bohrunternehmers ist deshalb möglichst klein zu bohren, um einen möglichst großen Bohrfortschritt zu erzielen. Bei einer möglichst klein gehaltenen Bohrung wird auch weniger Mutterboden entfernt und die Menge an Verpressmaterial bzw. Suspension verringert sich ebenfalls, was die Materialkosten deutlich verringert. Die Sondenfüße werden generell in Polyethylen hoher Dichte (PE-HD) gefertigt. Diese können aus dem vollen gearbeitet bzw. auch im Spritzgussverfahren hergestellt werden. Diese Sondenfüße dienen der Umkehr des Solekreislaufes und werden an die PE-HD-Rohre angeschweißt (entweder mittels Spiegelschweißen oder mit Elektroschweißmuffen). Neben Singlesonden, bestehend aus einem Vor- und einem Rücklaufschlauch werden häufig Duplexsonden mit je zwei Vor- und Rücklaufschläuchen verbaut. Bei großen Tiefen, über 200 m, wird ein Gewicht an den Sondenfuß gehängt und zusätzlich wird mit dem Einbaugestänge der Sondenfuß in die Bohrung gepresst. Problematisch ist dabei, dass die Sondenfüße durch den Einbau leicht beschädigt bzw. zerstört werden können und in solchem Fall der Sondenfuß ausgetauscht werden muss.

Die EP 1 387 130 A1 offenbart einen Sondenfuß für eine Erdsonde, welche zwei um etwa 180° gekrümmte Bogenteile aufweist, wobei ein Gewicht unterhalb des Sondenfußes fest mit diesem verbindbar ist.

Diese Gewicht kann den Sondenfuß allerdings nur unzureichend schützen, da die beiden bogenförmigen Rohrteile frei liegen und bei einem Verkanten und Steckenbleiben der Erdsonde leicht beschädigt werden können.

Aus der US 6,860.320 B2 ist ein Sondenfuß für eine Erdsonde bekannt, wobei der Bogenteil der Erdsonde von einem Mantel umgeben ist, welcher durch zwei zylindrische bzw. kegelförmige Halbschalen gebildet ist.

Die WO 2006/100014 A1 beschreibt ein Sondenendstück zur Strömungsumlenkung bei der Gewinnung von Erdwärme mit einem Zulaufrohr und einem Ablaufrohr, deren Enden mit einem Rohrkrümmer verbunden sind. Zum Schutz des Rohrkrümmers gegen mechanische Belastungen ist er im Krümmungsbereich von einem in Absenkrichtung verstärkten Schutzmantel aus Kunststoff umgeben.

Weitere Sondenfüße für Erdsonden sind aus der CH 687,268 A4, der DE 299 12 335 U1 und der WO 03/078905 A1 bekannt.

Aufgrund der Länge der Erdbohrungen kann es leicht zu einem Verkanten und einem Steckenbleiben der Erdsonde kommen. Das Gängigmachen einer steckengebliebenen Erdsonde kann bewirken, dass der Sondenfuß beschädigt wird. Bisherige Schutzhüllen aus Kunststoff haben sich dabei als nicht ausreichend erwiesen.

Aufgabe der Erfindung ist es, die genannten Nachteile zu vermeiden und eine Beschädigung des Sondenfußes bei Festfahren der Erdsonde zu vermeiden.

Erfindungsgemäß wird dies dadurch erreicht, dass der Schutzzylinder eine vorzugsweise angeschweißte Aufnahme für den Sondenfuß aufweist, welche den Sondenfuß zumindest in zwei gegenüberliegenden Bereichen umfasst. Der Schutzzylinder kann dabei einteilig ausgebildet sein.

Der Schutzzylinder ist fest mit dem Sondenfuß verbunden und stellt somit einen zuverlässigen Schutz für diesen dar. Durch das Eigengewicht des Schutzzylinders, welcher vorzugsweise aus einem schweren Vollmaterial, beispielsweise Stahl, besteht, wird ein rasches Abfahren der Erdsonde in die Erdbohrung ermöglicht. Ein zusätzliches separat am Sondenfuß aufgehängtes Gewicht ist nicht erforderlich.

Vorzugsweise ist vorgesehen, dass der Schutzzylinder lösbar, vorzugsweise über einen Querbolzen, mit dem Sondenfuß verbindbar ist.

Je nach dem vorgesehenen Anwendungsfall, der Länge der Erdbohrung und der Zahl der Zu- und Rücklaufrohre können verschieden schwere Schutzzylinder am Sondenfuß angebracht werden.

Um eine feste Verbindung mit dem Sondenfuß zu ermöglichen, ist der Querbolzen durch eine Bohrung im Bereich des Innenbogens des gekrümmten Bogenteils angeordnet.

Gemäß einer einfacheren und leichteren ersten Ausführungsvariante der Erfindung ist dabei vorgesehen, dass die Aufnahme durch zwei sich in Richtung der Sondenachse erstreckende, von der dem Sondenfuß zugewandten Stirnseite des Schutzzylinders vorstehende, diametral angeordnete Stege gebildet ist.

Eine zweite Ausführungsvariante der Erfindung sieht vor, dass die Aufnahme durch ein Rohr, vorzugsweise durch ein Mehrkantrohr, besonders vorzugsweise durch ein Vierkantrohr, gebildet ist, welches im Bereich der dem Sondenfuß zugewandten Stirnseite des Schutzzylinders fest mit diesem verbunden. Diese schwerere Ausführung ist insbesondere für größere Erdsonden und höhere Stoßkräfte geeignet.

Der Sondenfuß der Erdsonde wird über ein auf ein Druckelement einwirkendes Führungsgestänge in die Erdbohrung eingefahren. Dabei ist es wesentlich, dass der Sondenfuß durch das Druckelement keinen Schaden erleidet. Um ein rasches Einfahren des Sondenfußes in die Erdbohrung zu ermöglichen, ohne den Sondenfuß zu beschädigen, ist vorgesehen, dass die Aufnahme zumindest eine Angriffsfläche für ein riegelförmiges Druckelement aufweist, über welches die Erdsonde in eine Erdbohrung gedrückt werden kann. Besonders vorteilhaft ist es dabei, wenn die Aufnahme zumindest einen quer zur Sondenachse angeordneten Querbolzen aufweist, auf welchen das Druckelement einwirkt. Der an zwei diametral gegenüberliegenden Bereichen der Aufnahme befestigte Querbolzen kann dabei in eine mit dem Druckelement, beispielsweise durch Schweißen, fest verbundene Hülse eingeschoben sein. Der Querbolzen und das Druckelement sind bevorzugt zwischen zumindest einem Zu- und einem Rücklaufrohr angeordnet.

Dadurch, dass das Führungsgestänge über das Druckelement auf den Sondenfuß einwirkt und die Druckkräfte über den Querbolzen und die Aufnahme in den Schutzzylinder eingeleitet werden, kann eine Beschädigung der Erdsonde beim Einsetzen der Erdsonde in der Erdbohrung weitgehend vermieden werden.

In Weiterführung der Erfindung kann zum Schutz des Sondenfußes ein zwischen Sondenfuß und dem Schutzzylinder ausgebildeter Raum mit Dämpfungsmaterial ausgefüllt sein. Dadurch wird der Sondenfuß vor Erschütterungen durch das Druckelement geschützt.

Der Schutzzylinder kann aus massivem Rundstahl bestehen. In einer anderen kostengünstigen Ausführung kann vorgesehen sein, dass der Schutzzylinder hohl ausgebildet und mit Lastmaterial, vorzugsweise Blei, Schrott oder Eisenspäne gefüllt ist.

Die Erfindung wird im Folgenden anhand der Figuren näher erläutert. Es zeigen:
- Fig. 1: einen Sondenfuß mit einer erfindungsgemäßen Vorrichtung in einer ersten Ausführungsvariante in einem Längsschnitt;
- Fig. 2: den Sondenfuß in einem Schnitt gemäß der Linie II - II in Fig. 1;
- Fig. 3: ein Druckelement zum Einfahren des Sondenfußes in einer Erd- bohrung in einer Seitenansicht;
- Fig. 4: den Sondenfuß in einem Schnitt gemäß der Linie IV - IV in Fig. 1;
- Fig. 5: einen Sondenfuß mit einer erfindungsgemäßen Vorrichtung in einer Vorderansicht; und
- Fig. 6: den Sondenfuß in einer Seitenansicht.

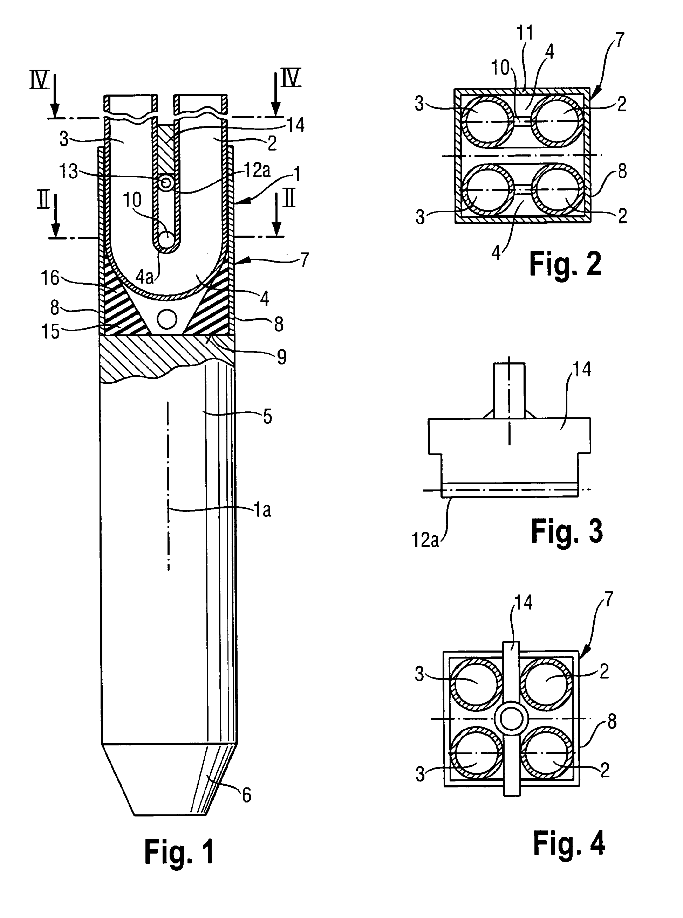

Die Fig. 1 bis Fig. 4 zeigen einen Sondenfuß 1 einer Duplex-Erdsonde mit zwei Zulaufrohren 2 und zwei Rücklaufrohren 3, wobei der Sondenfuß 1 pro Zu- und Rücklaufrohr 2, 3 ein um etwa 180° gekrümmtes Bogenteil 4 aufweist. Zum Schutz des Sondenfußes 1 ist ein Schutzzylinder 5 - in Betriebslage betrachtet - unterhalb des Sondenfußes 1 angeordnet und fest mit dem Sondenfuß 1 verbunden. Der Schutzzylinder 5 besteht beispielsweise aus einem massiven Rundstahl, wobei der Schutzzylinder 5 an dem dem Sondenfuß 1 abgewandten Ende 6 konisch verjüngt ist. Es ist aber auch möglich, den Schutzzylinder 5 als mit Schrott, Blei oder Eisenspänen gefülltes Rohr auszubilden. Zur Befestigung des Schutzzylinders 5 weist dieser eine Aufnahme 7 auf, die lösbar mit dem Sondenfuß 1 verbunden ist.

Bei dem in den Figuren 1 bis 4 dargestellten Ausführungsbeispiel ist die Aufnahme durch ein Vierkantrohr 8 gebildet, welches im Bereich der an dem Sondenfuß 1 zugewandten Stirnseite 9 mit dem Schutzzylinder 5 verschweißt ist. Der Sondenfuß 1 weist im Bereich der Innenseite 4a des Bogenteils 4 eine Bohrung 10 zur Aufnahme einer nicht weiter dargestellten Befestigungsschraube für die Aufnahme 7 auf, wobei die Befestigungsschraube in ersten Bohrungen 11 der Aufnahme 7 geführt ist.

Weiters weist die Aufnahme 7 zweite Bohrungen 12 für einen durch eine Hülse 12a geschobenen Querbolzen 13 auf, die mit einem riegelförmigen Druckelement 14 fest, beispielsweise durch Schweißen, verbunden ist. Das Druckelement 14 ist dabei zwischen den Zu- und Rücklaufrohren 2, 3 eingeschoben und wirkt über die Hülse 12a, den Querbolzen 13 und die Aufnahme 7 auf den Schutzzylinder 5 ein. Der Querbolzen 13 dient zum Ableiten der Kräfte in die Aufnahme 7 und in den Schutzzylinder 5. Weiters verhindert der Querbolzen eine radiale Verformung der Aufnahme 7 durch die auftretenden Druckkräfte.

Um zu vermeiden, dass der Sensorfuß 1 durch Vibrationen und Stöße Schaden leidet, ist ein Hohlraum 15 zwischen dem Sensorfuß 1 und dem Schutzzylinder 5 mit Dämpfungsmaterial 16, beispielsweise schlagabsorbierenden Gummi oder Kunststoff, gefüllt.

Über das Druckelement 14 und die Aufnahme 7 können Stoßkräfte von über 1000 kp auf die durch das Ende 6 gebildete Sondenspitze aufgebracht werden, ohne die Sonde übermäßig zu belasten.

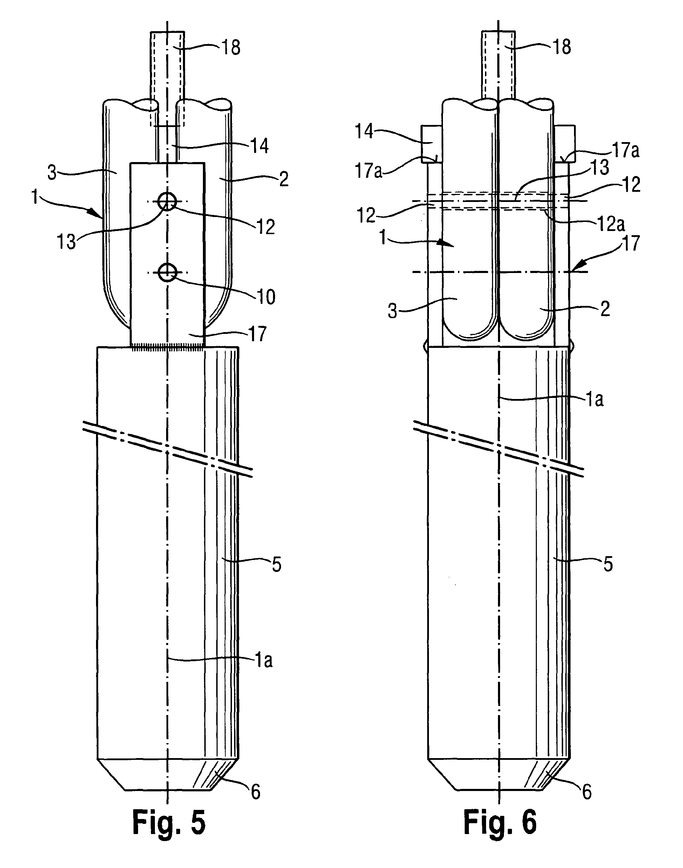

Die Fig. 5 und Fig. 6 zeigen eine einfachere zweite Ausführungsvariante, bei der die Aufnahme durch zwei beidseits der Zu- und Rücklaufrohre 2, 3 angeordnete Stege 17 gebildet ist, welche in Richtung der Sensorachse 1a von der dem Sensorfuß 1 zugewandten Stirnseite 9 des Schutzzylinders 5 vorragen und diametral an der Stirnseite des Schutzzylinders 5 angeschweißt sind. Die Stege 17 weisen Angriffsflächen 17a für das Druckelement 14 auf, so dass das Druckelement 14 einerseits über den Querbolzen 13, andererseits über die Angriffsflächen 17a direkt auf die Stege 17 einwirkt. Mit Bezugszeichen 18 ist eine beispielsweise als Gewindebuchse ausgeführte Buchse zur Aufnahme eines Führungsgestänges bezeichnet. Über das auf das Druckelement 14 einwirkende Führungsgestänge kann die Erdsonde in das Erdloch eingebracht werden, ohne das übermäßige Belastungen in empfindlichen Bereichen der Erdsonde auftreten. Das Führungsgestänge kann nach lagerichtigem Einsetzen der Erdsonde in der Erdbohrung wieder entfernt werden.

Mit der erfindungsgemäßen Vorrichtung zum Schutz des Sondenfußes 1 kann eine Beschädigung bzw. Zerstörung des Sondenfußes 1 beim Einbau zuverlässig vermieden werden und somit der Kosten- und Zeitaufwand beim Setzen der Erdsonden wesentlich verringert werden.

## Patentansprüche

1. Vorrichtung zum Schutz eines Sondenfußes (1) für eine Erdsonde, welche zumindest ein um etwa 180° gekrümmtes Bogenteil (4) aufweist, mittels dessen Zu- und Rücklaufrohre (2, 3) zur Durchströmung eines Wärmeträgers verbindbar sind, wobei ein Schutzzylinder (5) - in Betriebslage betrachtet - unterhalb des Sondenfußes (1) fest mit diesem verbindbar ist, **dadurch gekennzeichnet, dass** der Schutzzylinder (5) eine vorzugsweise angeschweißte Aufnahme (7) für den Sondenfuß (1) aufweist, welche den Sondenfuß (1) zumindest in zwei gegenüberliegenden Bereichen umfasst.

2. Vorrichtung nach Anspruch 1, **dadurch gekennzeichnet, dass** der Schutzzylinder (5) einteilig ausgebildet ist.

3. Vorrichtung nach Anspruch 1 oder 2, **dadurch gekennzeichnet, dass** der Schutzzylinder (5) lösbar, vorzugsweise über einen Querbolzen (13), mit dem Sondenfuß (1) verbindbar ist.

4. Vorrichtung nach einem der Ansprüche 1 bis 3, **dadurch gekennzeichnet, dass** der Querbolzen (13) durch eine Bohrung (10) im Bereich eines Innenbogens (4a) des gekrümmten Bogenteils (4) angeordnet ist.

5. Vorrichtung nach einem der Ansprüche 1 bis 4, **dadurch gekennzeichnet, dass** die Aufnahme (7) durch zwei sich in Richtung der Sondenachse (1a) erstreckende, von der dem Sondenfuß (1) zugewandten Stirnseite (9) Des Schutzzylinders (5) vorstehende, diametral angeordnete Stege (17) gebildet ist.

6. Vorrichtung nach einem der Ansprüche 1 bis 5, **dadurch gekennzeichnet, dass** die Aufnahme (7) durch ein Rohr (8), vorzugsweise durch ein Mehrkantrohr, besonders vorzugsweise durch ein Vierkantrohr gebildet ist, welches im Bereich der dem Sondenfuß (1) zugewandten Stirnseite (9) des Schutzzylinders (5) fest mit diesem verbunden.

7. Vorrichtung nach einem der Ansprüche 1 bis 6, **dadurch gekennzeichnet, dass** die Aufnahme (7) eine Angriffsfläche (17a) für ein riegelförmiges Druckelement (14) aufweist, über welches die Erdsonde in eine Erdbohrung gedrückt werden kann.

8. Vorrichtung nach einem der Ansprüche 1 bis 7, **dadurch gekennzeichnet, dass** die Aufnahme (7) zumindest einen quer zur Sondenachse (1a) angeordneten Querbolzen (13) aufweist, auf welchen das Druckelement (14) einwirkt.

9. Vorrichtung nach Anspruch 8, **dadurch gekennzeichnet, dass** der Querbolzen in eine mit dem Druckelement (14) fest verbundene Hülse (12a) eingeschoben ist.

10. Vorrichtung nach einem der Anspruch 8 oder 9, **dadurch gekennzeichnet, dass** der Querbolzen (13) zwischen zumindest einem Zu- und einem Rücklaufrohr (2, 3) angeordnet ist.

11. Vorrichtung nach einem der Ansprüche 1 bis 10, **dadurch gekennzeichnet, dass** ein zwischen dem Sondenfuß (1) und dem Schutzzylinder (5) ausgebildeter Raum (15) mit einem Dämpfungsmaterial (16) ausgefüllt ist.

12. Vorrichtung nach einem der Ansprüche 1 bis 11, **dadurch gekennzeichnet, dass** der Schutzzylinder (5) aus massivem Rundstahl besteht.

13. Vorrichtung nach einem der Ansprüche 1 bis 11, **dadurch gekennzeichnet, dass** der Schutzzylinder (5) hohl ausgebildet und mit Lastmaterial, vorzugsweise Blei, Schrott oder Eisenspäne gefüllt ist.
